(19) Europäisches Patentamt

European Patent Office

Office européen des brevets

(11) **EP 4 712 260 A1**

(12) **EUROPEAN PATENT APPLICATION**

(43) Date of publication:
**18.03.2026 Bulletin 2026/12**

(21) Application number: **25153091.1**

(22) Date of filing: **21.01.2025**

(51) International Patent Classification (IPC):
*H01Q 1/22* (2006.01)          *H01Q 21/00* (2006.01)
*H01Q 21/06* (2006.01)          *H01Q 23/00* (2006.01)

(52) Cooperative Patent Classification (CPC):
**H01Q 21/0025; H01Q 1/2283; H01Q 21/0087;
H01Q 21/065; H01Q 23/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.09.2024 TW 113134326**

(71) Applicant: **Auden Techno Corp.
Taoyuan City 334 (TW)**

(72) Inventor: **SHIU, Run-Kai
334 Taoyuan City (TW)**

(74) Representative: **Viering, Jentschura & Partner
mbB
Patent- und Rechtsanwälte
Am Brauhaus 8
01099 Dresden (DE)**

(54) **ARRAY ANTENNA DEVICE**

(57)    An array antenna device (100) includes a carrier (1), and a plurality of circularly polarized antenna modules (2), at least one beamforming chip (4), and a plurality of amplifiers (3) that are disposed on the carrier (1). The carrier (1) has a thickness direction (DT), and includes a circuit portion (11), a plurality of antenna portions (12), and a plurality of welded structures (13). The circuit portion (11) includes a plurality of boards that are stacked on each other. The boards are symmetrically arranged along a symmetry axis that is perpendicular to the thickness direction (DT). The antenna portions (12) are disposed on the circuit portion (11). Each of the antenna portions (12) is detachably connected to the circuit portion (11) through one of the welded structures (13). The circularly polarized antenna modules (2) are respectively disposed on the antenna portions (12). The beamforming chip (4) is electrically connected to the circularly polarized antenna modules (2). The amplifiers (3) are disposed on the circuit portion (11).

FIG. 2

EP 4 712 260 A1

## Description

### FIELD OF THE INVENTION

The present invention relates to an antenna device, and more particularly to an array antenna device.

### BACKGROUND OF THE INVENTION

The structure of a conventional array antenna device is integration of a plurality of patch antennas and a plurality of radio frequency circuits onto a single printed circuit board. However, in the conventional array antenna device, a stacking structure of the single printed circuit board may become asymmetrical when a thick dielectric layer is used to optimize the performance of the patch antennas, thereby causing the printed circuit board to warp. In addition, when one of the patch antennas in the conventional array antenna device is damaged, the damaged patch antenna cannot be replaced individually, so that the performance of the conventional array antenna device is degraded.

### SUMMARY OF THE INVENTION

In response to the above-referenced technical inadequacies, the present invention provides an array antenna device.

In order to solve the above-mentioned problems, one of the technical aspects adopted by the present invention is to provide an array antenna device. The array antenna device includes a carrier, a plurality of circularly polarized antenna modules, at least one beamforming chip, and a plurality of amplifiers. The carrier has a thickness direction, and includes a circuit portion, a plurality of antenna portions, and a plurality of welded structures. The circuit portion includes a plurality of boards that are stacked on each other, and the boards are symmetrically arranged along a symmetry axis that is perpendicular to the thickness direction. The antenna portions are disposed on the circuit portion. Each of the antenna portions is detachably connected to the circuit portion through one of the welded structures. The circularly polarized antenna modules are respectively disposed on the antenna portions. The at least one beamforming chip is electrically connected to the circularly polarized antenna modules. The amplifiers are disposed on the circuit portion.

In one of the possible or preferred embodiments, a plurality of projection regions are defined by orthogonally projecting the circularly polarized antenna modules toward the circuit portion along the thickness direction, the circuit portion has a plurality of installation grooves that are respectively located within the projection regions, and the amplifiers are respectively disposed in the installation grooves.

In one of the possible or preferred embodiments, the carrier includes a plurality of grounding conductive pillars, the grounding conductive pillars are embedded in the circuit portion, and each of the installation grooves is surrounded by the grounded conductive pillars.

In one of the possible or preferred embodiments, a height of each of grounding conductive pillars along the thickness direction is greater than a height of each of the amplifiers along the thickness direction.

In one of the possible or preferred embodiments, the grounding conductive pillars are radially arranged with the amplifier as a center.

In one of the possible or preferred embodiments, any two adjacent ones of the grounding conductive pillars are separated by a predetermined distance, and the predetermined distance is less than $C/8F\sqrt{DK}$.. Here, C represents the speed of light, F represents an expected noise frequency, and DK is a dielectric constant of the circuit portion.

In one of the possible or preferred embodiments, a diameter of each of the grounding conductive pillars is greater than or equal to 8 mils.

In one of the possible or preferred embodiments, each of the circularly polarized antenna modules includes at least one patch antenna that is exposed on a corresponding one of the antenna portions and a radio frequency circuit that is embedded within the corresponding one of the antenna portions. One port of the amplifiers is connected to the at least one beamforming chip and another port of the amplifiers is connected to the at least one patch antenna through the radio frequency circuit.

Therefore, in the array antenna device provided by the present invention, by virtue of "the boards being symmetrically arranged along a symmetry axis that is perpendicular to the thickness direction," and "each of the antenna portions being detachably connected to the circuit portion through one of the welded structures," the array antenna device not only can avoid warping, but also allows one of the circularly polarized antenna modules that is damaged to be replaced individually.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:

FIG. 1 is a schematic perspective view of an array antenna device according to the present invention;
FIG. 2 is a schematic cross-sectional view taken along line II-II of FIG. 1;

FIG. 3 is a schematic cross-sectional view of another configuration of the array antenna device according to the present invention;

FIG. 4 is a schematic cross-sectional view of yet another configuration of the array antenna device according to the present invention; and

FIG. 5 is a schematic bottom view of the array antenna device in FIG. 4.

## DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

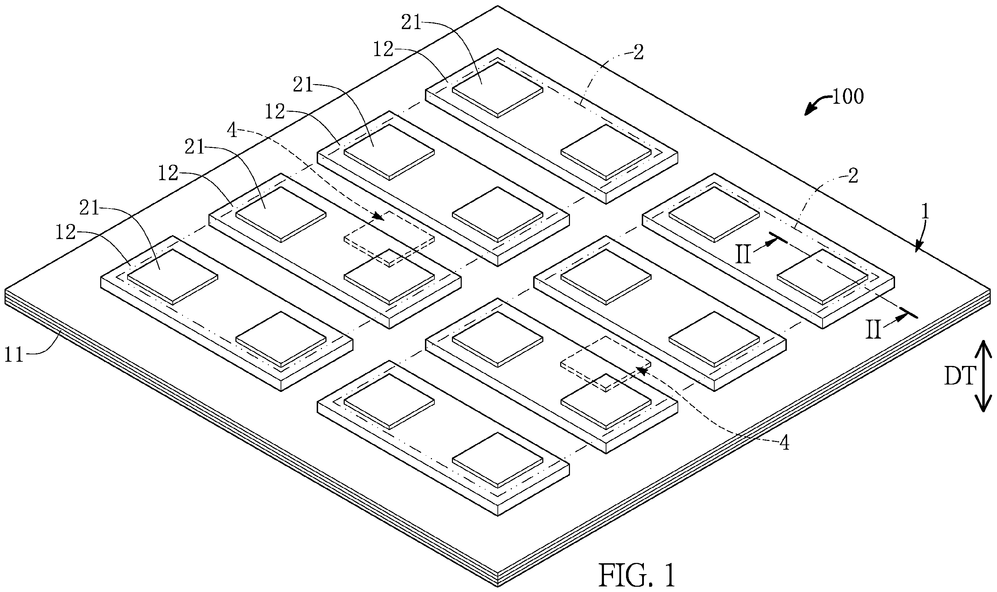

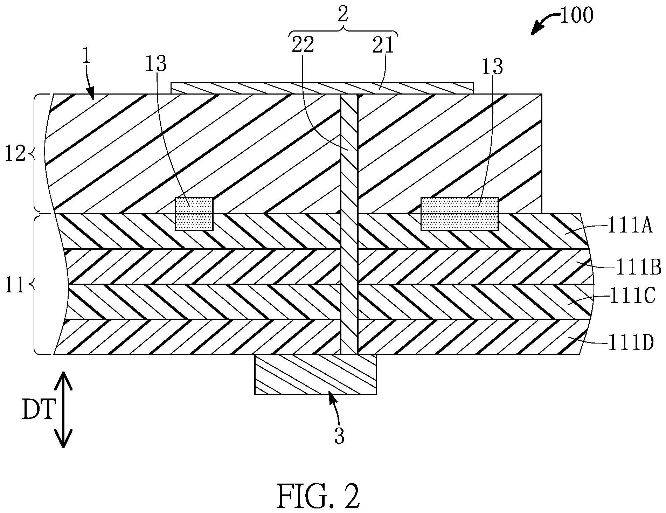

Referring to FIG. 1 to FIG. 5, an embodiment of the present invention provides an array antenna device 100. As shown in FIG. 1 and FIG. 2, the array antenna device 100 includes a carrier 1, and a plurality of circularly polarized antenna modules 2, a plurality of amplifiers 3, and at least one beamforming chip 4 that are arranged on the carrier 1. The following description describes the structure and connection relation of each component of the array antenna device 100.

Referring to FIG. 1 and FIG. 2, the carrier 1 is a multi-layer structure, and includes a circuit portion 11, a plurality of antenna portions 12, and a plurality of welded structures 13. Specifically, the carrier 1 has a thickness direction DT, and each of the antenna portions 12 is mounted on the circuit portion 11 along the thickness direction DT. In addition, the antenna portions 12 are spaced apart from each other.

The circuit portion 11 includes a plurality of boards (e.g., 111A to 111D) stacked along the thickness direction DT, and the boards are symmetrically arranged along a symmetry axis that is perpendicular to the thickness direction DT. For example, from a cross-sectional view of the circuit portion 11 along the thickness direction DT, when the circuit portion 11 includes a first board 111A, a second board 111B, a third board 111C, and a fourth board 111D that are sequentially stacked, a thickness of the first board 111A can be equal to a thickness of the fourth board 111D, and a thickness of the second board 111B can be equal to a thickness of the third board 111C. In other words, the first board 111A and the second board 111B are one group, and the third board 111C and the fourth board 111D are another group. The two groups are symmetrically arranged by using a contact line (not shown in the drawings) that is located between the second board 111B and the third board 111C as the symmetry axis.

In addition, the welded structures 13 can act as connecting media between the antenna portions 12 and the circuit portion 11. In other words, each of the antenna portions 12 is detachably connected to the circuit portion 11 through the welded structures 13. Accordingly, each of the antenna portions 12 can be selectively detached from the circuit portion 11 by desoldering.

Referring to FIG. 1 and FIG. 2, the circularly polarized antenna modules 2 are respectively disposed on the antenna portions 12. In other words, each of the antenna portions 12 is mounted on one of the circularly polarized antenna modules 2. In practice, each of the circularly polarized antenna modules 2 includes at least one patch antenna 21 that is exposed on the antenna portion 12, and a radio frequency circuit 22 that is embedded within the antenna portion 12. In the present embodiment, each of the circularly polarized antenna modules 2 is exemplified to have two patch antennas 21, but the present invention is not limited thereto. It should be noted that, since how each of the circularly polarized antenna modules 2 achieves the circular polarization field pattern is known to those skilled in the art and are not the focus of the present invention, details thereof will not be described herein.

Furthermore, in the present embodiment, a quantity of the at least one beamforming chip 4 is two. Each of the two beamforming chips 4 is connected to eight patch antennas 21, and can integrate the circularly polarized antenna modules 2.

Referring to FIG. 2, the amplifiers 3 of the present embodiment can be exemplified to be low-noise amplifiers, and are electrically coupled to the radio frequency circuits 22 of the circularly polarized antenna modules 2. The amplifiers 3 can be disposed on a side of the circuit portion 11 that is opposite to the antenna portions 12. In other words, the amplifiers 3 are also exposed on a surface of the circuit portion 11. In practice, each of the amplifiers 3 is connected to the beamforming chip 4, and is connected to one of the two patch antennas 21 of the circularly polarized antenna module 2 through the radio frequency circuit 22. Another one of the two patch antennas 21 in the same circularly polarized antenna module 2 is connected to the beamforming chip 4 via the radio frequency circuit.

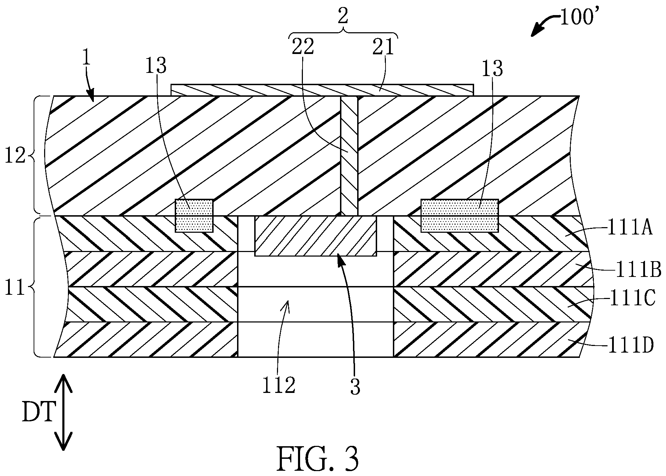

It should be noted that, since signal-to-noise ratio between each of the amplifiers 3 and the circularly polarized antenna module 2 of array antenna devices 100' and 100" will be affected by a length of the radio frequency circuit 22, the circuit portion 11 is also provided with an installation groove 112 for accommodating each of the amplifiers 3 (as shown in FIG. 3 to FIG. 5).

Specifically, a plurality of projection regions (not shown in the drawings) are defined by orthogonally projecting the circularly polarized antenna modules 2 (e.g., the patch antennas 21) toward the circuit portion 11 along the thickness direction DT, the circuit portion 11 has multiple ones of the installation groove 112 that are respectively located within the projection regions, and the amplifiers 3 are respectively disposed in the installation grooves 112. Accordingly, a length of the radio frequency circuit 22 that is connected to the patch antennas 21 and the amplifiers 3 can be reduced by the installation groove 112, so as to ensure that a noise figure of the array antenna device 100 is reduced.

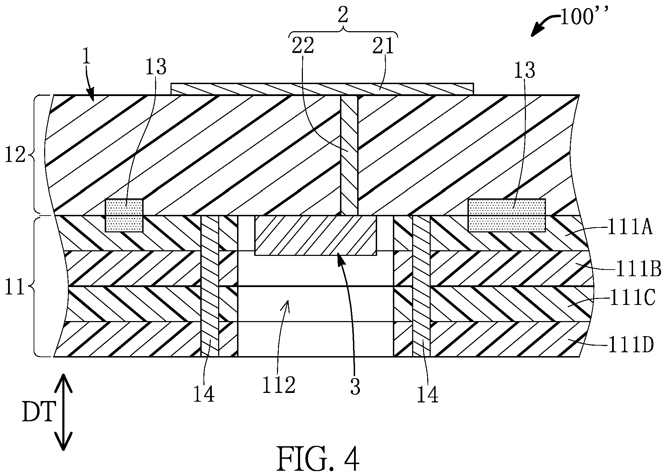

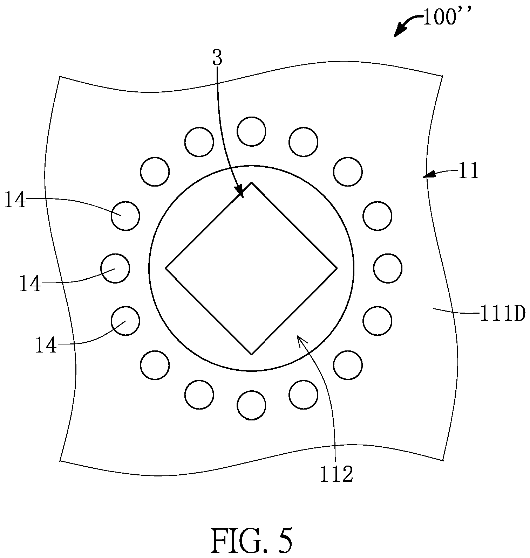

Referring to FIG. 4 and FIG. 5, each of the amplifiers 3 is susceptible to environmental interference. As such, the carrier 1 of the array antenna device 100" also includes a plurality of grounding conductive pillars 14. The grounding conductive pillars 14 are embedded in the circuit portion 11, and each of the installation grooves 112 is surrounded by the grounding conductive pillars 14, so that the grounding conductive pillars 14 can create a shielding mask for each of the amplifiers 3. Accordingly, each of the amplifiers 3 can suppress environmental noise through the grounding conductive pillars 14.

Preferably, the grounding conductive pillars 14 are radially arranged with one of the amplifiers 3 as a center. A height of each of the grounding conductive pillars 14 along the thickness direction DT can also be greater than a height of each of the amplifiers 3 along the thickness direction DT, so that each of the amplifiers 3 can be more evenly surrounded by the shielding mask.

In practice, in order to ensure the effect of the shielding mask, any two adjacent ones of the grounding conductive pillars 14 are separated by a predetermined distance. The predetermined distance is preferably less than $C/8F\sqrt{DK}$, in which C represents a speed of light, F represents an expected noise frequency, and DK is a dielectric constant of the circuit portion 11. Moreover, a diameter of each of the grounding conductive pillars 14 is preferably greater than or equal to 8 mils. However, the present invention is not limited thereto. It should be noted that the expected noise frequency can be adjusted (or changed) according to the expected use environment of the array antenna device.

[Beneficial Effects of the Embodiment]

In conclusion, in the array antenna device provided by the present invention, by virtue of "the boards being symmetrically arranged along a symmetry axis that is perpendicular to the thickness direction," and "each of the antenna portions being detachably connected to the circuit portion through one of the welded structures," the array antenna device not only can avoid warping, but also allows one of the circularly polarized antenna modules that is damaged to be replaced individually.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

**Claims**

1. An array antenna device (100), **characterized by** comprising:
   a carrier (1) having a thickness direction (DT), wherein the carrier (1) includes:

      a circuit portion (11) including a plurality of boards that are stacked on each other, wherein the boards are symmetrically arranged along a symmetry axis that is perpendicular to the thickness direction (DT);
      a plurality of antenna portions (12) disposed on the circuit portion (11); and
      a plurality of welded structures (13), wherein each of the antenna portions (12) is detachably connected to the circuit portion (11) through one of the welded structures (13);
      a plurality of circularly polarized antenna modules (2) respectively disposed on the antenna portions (12);
      at least one beamforming chip (4) electrically connected to the circularly polarized antenna modules (2); and
      a plurality of amplifiers (3) disposed on the circuit portion (11).

**2.** The array antenna device (100) according to claim 1, wherein a plurality of projection regions are defined by orthogonally projecting the circularly polarized antenna modules (2) toward the circuit portion (11) along the thickness direction (DT), the circuit portion (11) has a plurality of installation grooves (112) that are respectively located within the projection regions, and the amplifiers (3) are respectively disposed in the installation grooves (112).

**3.** The array antenna device (100) according to claim 2, wherein the carrier (1) includes a plurality of grounding conductive pillars (14), the grounding conductive pillars (14) are embedded in the circuit portion (11), and each of the installation grooves (112) is surrounded by the grounding conductive pillars (14).

**4.** The array antenna device (100) according to claim 3, wherein a height of each of grounding conductive pillars (14) along the thickness direction (DT) is greater than a height of each of the amplifiers (3) along the thickness direction (DT).

**5.** The array antenna device (100) according to claim 3, wherein the grounding conductive pillars (14) are radially arranged with the amplifier as a center.

**6.** The array antenna device (100) according to claim 3, wherein any two adjacent ones of the grounding conductive pillars (14) are separated by a predetermined distance, and the predetermined distance is less than $C/8F\sqrt{DK}$ ; wherein C represents a speed of light, F represents an expected noise frequency, and DK is a dielectric constant of the circuit portion (11).

**7.** The array antenna device (100) according to claim 3, wherein a diameter of each of the grounding conductive pillars (14) is greater than or equal to 8 mils.

**8.** The array antenna device (100) according to claim 1, wherein each of the circularly polarized antenna modules (2) includes at least one patch antenna (21) that is exposed on a corresponding one of the antenna portions (12) and a radio frequency circuit (22) that is embedded within the corresponding one of the antenna portions (12); wherein one port of the amplifiers (3) is connected to the at least one beamforming chip (4) and another port of the amplifiers (3) is connected to the at least one patch antenna (21) through the radio frequency circuit (22).

FIG. 1

EP 4 712 260 A1

FIG. 2

FIG. 3

FIG. 4

FIG. 5

EUROPEAN SEARCH REPORT

Application Number

EP 25 15 3091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/026125 A1 (VIGANO MARIA CAROLINA [CH] ET AL) 26 January 2023 (2023-01-26) | 1,8 | INV. H01Q1/22 |
| A | * figures 1-3,5,9 * | 2-7 | H01Q21/00 H01Q21/06 |
| Y | WO 2023/279245 A1 (HUAWEI TECH CO LTD [CN]) 12 January 2023 (2023-01-12) | 1-4,8 | H01Q23/00 |
| A | * page 2 - page 25; figures 4-10 * | 5-7 | |
| Y | Anonymous: "PCB Warpage-How To Keep Your PCBs Flat And Functional - Jhdpcb", , 21 September 2023 (2023-09-21), pages 1-17, XP093285599, Retrieved from the Internet: URL:https://web.archive.org/web/2023092115 4239/https://jhdpcb.com/blog/avoid-pcb-war page/ * page 10 * | 1-4,8 | |
| Y | Imagineering Inc: "CAUSES OF PCB WARPING & HOW TO PREVENT IT", , 28 February 2022 (2022-02-28), pages 1-6, XP093285603, Retrieved from the Internet: URL:https://www.pcbnet.com/blog/causes-of- pcb-warping-how-to-prevent-it/ * page 3 * | 1-4,8 | |

**TECHNICAL FIELDS SEARCHED (IPC)**

H01Q

The present search report has been drawn up for all claims

| Place of search | Date of completion of the search | Examiner |
|---|---|---|
| The Hague | 19 June 2025 | Sípal, Vít |

EPO FORM 1503 03.82 (P04C01)

## ANNEX TO THE EUROPEAN SEARCH REPORT
## ON EUROPEAN PATENT APPLICATION NO.

EP 25 15 3091

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2025

| Patent document cited in search report | Publication date | Patent family member(s) | | Publication date |
|---|---|---|---|---|
| US 2023026125 A1 | 26-01-2023 | US | 2019013580 A1 | 10-01-2019 |
| | | US | 2021184366 A1 | 17-06-2021 |
| | | US | 2023026125 A1 | 26-01-2023 |
| WO 2023279245 A1 | 12-01-2023 | CN | 117597832 A | 23-02-2024 |
| | | WO | 2023279245 A1 | 12-01-2023 |

EPO FORM P0459

For more details about this annex : see Official Journal of the European Patent Office, No. 12/82